# EUROPEAN PATENT SPECIFICATION

(11) **EP 0 773 466 B1**
(45) Date of publication and mention of the grant of the patent: **22.02.2006**
(21) Application number: 96914442.7
(22) Date of filing: 24.05.1996
(51) Int. Cl.: G02F 1/1339, C08F 291/00, C08J 7/16, G02F 1/1337

(54) **LIQUID CRYSTAL DISPLAY DEVICE, METHOD OF PRODUCTION OF SPACER, AND LIQUID CRYSTAL DISPLAY DEVICE USING THE SPACER**
FLÜSSIGKRISTALL-ANZEIGEVORRICHTUNG, VERFAHREN ZUR HERSTELLUNG EINES ABSTANDSHALTERS UND FLÜSSIGKRISTALL-ANZEIGEVORRICHTUNG, DIE DIESEN ABSTANDSHALTER VERWENDET
DISPOSITIF D'AFFICHAGE A CRISTAUX LIQUIDES, PROCEDE DE PRODUCTION D'UN ELEMENT D'ESPACEMENT, ET DISPOSITIF D'AFFICHAGE A CRISTAUX LIQUIDES DANS LEQUEL LEDIT ELEMENT EST UTILISE

(30) Priority: 26.05.1995 JP 15395795; 24.01.1996 JP 3143696; 13.03.1996 JP 8576496
(43) Date of publication of application: 14.05.1997
(73) Proprietor: Natoco Paint Co., Ltd., Aichi 467 (JP)
(72) Inventor: YAMAKADO, Yoshihiko Natoco Paint Co., Ltd.,, Nagoya-shi Aichi 467 (JP); SHIRAISHI, Takeshi Natoco Paint Co., Ltd.,, Nagoya-shi Aichi 467 (JP); OZEKI, Hitomi Natoco Paint Co., Ltd.,, Nagoya-shi Aichi 467 (JP); SAKAI, Masahito Natoco Paint Co., Ltd.,, Nagoya-shi Aichi 467 (JP); HATA, Hironori Natoco Paint Co., Ltd.,, Nagoya-shi Aichi 467 (JP); DOI, Michio Natoco Paint Co., Ltd.,, Nagoya-shi Aichi 467 (JP); HARA, Katsumi Natoco Paint Co., Ltd.,, Nagoya-shi Aichi 467 (JP); OHNO, Namiko Natoco Paint Co., Ltd.,, Nagoya-shi Aichi 467 (JP)
(74) Representative: Bannerman, David Gardner
(86) International application number: PCT/JP1996/001408
(87) International publication number: WO 1996/037808

(56) References cited:
- EP-A- 0 653 663
- JP-A- 5 232 480
- JP-A- 6 011 719
- JP-A- 6 118 421
- US-A- 5 389 288

## Description

### (Technical Field Relating to the Invention)

The present invention relates to a spacer for a liquid crystal display element, a process for producing such a spacer and a liquid crystal display element using the spacer.

### (Background Art)

In the liquid crystal display element, a liquid crystal layer is held between a pair of glass substrates which are each provided with a transparent conductive layer at an inner side, and a liquid crystal spacer is interposed to ensure a given gap between a pair of the glass substrates. As such a spacer, inorganic beads such as glass beads and silica beads, organic synthetic resin beads such as polystyrene beads, etc. are used. There are also available the above beads in which a low melting point synthetic resin, wax or the like is physically attached or chemically bonded to the surfaces thereof so as to enhance adhesion between the glass substrates (JP-A-63 94224).

### (Technical problem)

However, the above conventional spacers cause disturbance of the orientation of liquid crystal molecules around spacer particles upon receipt of voltage or external force such as vibration or impact in production steps or during use (Abnormal orientation). If such an abnormal orientation occurs, areas called domains are formed around the spacer particles. The domains cause light passing around spacer particles, which causes ring-shaped unevenness, white stripes, and reduction in display contrast in the display element.

It is known that the above domains can be removed by ensuring vertical orientation of the liquid crystal molecules near the spacer particles. As a technique for promoting the vertical orientation at the surfaces of the spacer particles, there is proposed a liquid crystal spacer in which fine particles of a cross-linked polymer are treated with a silane coupling agent having long-chain alkyl groups to make the long-chain alkyl groups present at surfaces of the fine particles (JP-A-4 177324, JP-A-6 11719, JP-A-6-180456, etc.). According to this conventional technique, since the alkyl groups are insufficiently introduced into the surfaces of the spacer particles, domains do not completely disappear and adhesion of the orienting films upon the substrates is not sufficient.

The present invention is to provide a spacer which does not disturb the orientation of liquid crystal molecules even near surfaces of spacer particles, a process for producing such a spacer, and a liquid crystal display element using the spacer.

### (Countermeasures for solving the problems)

As a countermeasure for solving the above conventional problems, the present invention is to provide a spacer for a liquid crystal display element which spacer is made of particles of a polymer having long-chain alkyl groups at their surfaces. This spacer can be produced by reacting polymer particles having functional groups at their surfaces with a long-chain alkyl compound having functional groups reactable with said functional groups and introducing the long-chain alkyl groups into the polymer particles. (First aspect of the present invention)

In addition to the above problems, the present inventors discovered that it would not necessarily easy to introduce long-chain alkyl groups into the surfaces of the fine particles of the cross-linked polymer at a desired concentration on the ground that the fine particles of the cross-linked polymer are impregnated with a polymerizable vinyl monomer having long-chain and a polymerization initiator, an impregnation degree differs depending upon kinds of the cross-linked polymer fine particles, the polymerizable vinyl monomer and the polymerization initiator, and the impregnation degree also differs depending upon impregnating condition such as an impregnation temperature and an impregnation pressure. Further, if the polymerizable vinyl monomer or the polymerization initiator is to be impregnated into the fine particles of the cross-linked polymer, the polymerization efficiency decreases because the polymerizable vinyl monomer and the polymerization initiator are diluted with the cross-linked polymerization fine particles.

As a countermeasure for solving the above problem, the present invention is to provide a spacer for a liquid crystal panel which spacer is made of particles of a polymer in which graft polymer chains having long-chain alkyl groups are introduced into surfaces of the particles. The spacer for the liquid crystal panel can be produced by graft polymerizing one or more kinds of polymerizable vinyl monomers having long-chain alkyl groups or a mixture composed of one or more kinds of polymerizable vinyl monomers and one or more kinds of other polymerizable vinyl monomers polymerizable with former polymerizable vinyl monomers to surfaces of particles of a polymer in which radical chain transferable functional groups and/or radical polymerization initiatable active groups are introduced into the surfaces. (Second aspect of the present invention)

As the radical chain transferable functional group, for example, a mercapto group and/or a polymerizable vinyl group is preferred. As the radical polymerization initiatable active group, for example, a peroxide group and/or an azo group is preferred.

Further, the present invention is to provide a space for a liquid crystal panel which spacer is made of particles of a polymer each surface-coated with a layer of a polymer having long-chain alkyl groups. In the spacer for the liquid crystal panel, the surfaces of the polymer particles are desirably covalently bonded to the polymer layers having the long-chain alkyl groups. Further, the above spacer for the liquid crystal panel can be produced, for example, by coating the surfaces of the polymer particles having given functional groups introduced at the surfaces with polymer layers having introduced functional groups reactable with the long-chain alkyl groups and the functional groups of the polymer particles and forming covalent bonds between the functional groups of the polymer particles and those of the polymer layers through reaction. (Third aspect of the present invention)

As the process for producing the polymer particles coated with the polymer layers for use in the liquid crystal spacer, the above-mentioned precipitation polymerization process, the seed polymerization process, etc. are desired. In the present invention, the surfaces of the polymer particles are desirably covalently bonded to the polymer layers having the long-chain alkyl groups. For this purpose, the given functional groups are introduced into the surfaces of the polymer particles, and into the polymer layers having the long-chain alkyl groups are introduced the functional groups reactable with those of the polymer particles. In order to introduce the given functional groups into the surfaces of the polymer particles, a polymerizable vinyl monomer having the given functional groups or a monomer mixture composed of a polymerizable vinyl monomer having the given functional groups and another polymerizable vinyl monomer copolymerizable with the former polymerizable vinyl monomer is used.

Further, the present invention is to provide a liquid display element using the above spacer (Fourth aspect of the present invention).

### (Best Mode for Carrying out the Invention)

### (Polymer Particles)

The polymer particles for the spacer in the liquid crystal display element according to the first aspect of the present invention is ordinarily produced by either one of the following two processes.

### 1. Precipitation polymerization process

A compound having polymerizable vinyl groups (hereinafter referred to briefly as vinyl monomer) is polymerized in a solvent which dissolves the vinyl monomer but does not dissolve a polymer obtained from the vinyl monomer, and the polymer produced is precipitated in the form of particles.

### 2. Seed polymerization process

The polymer particles produced by the above precipitation polymerization process are used as seed particles, which are swelled with a given polymerizable vinyl monomer. The polymerizable monomer is further polymerized in the polymer particles (seed particles), thereby obtaining secondary polymer particles.

As the polymerizable vinyl monomer 1 to be used for the production of the polymer particles in the present invention, mention may be made of, for example, aliphatic or cyclic acrylates and/or methacrylates such as methyl acrylate, ethyl acrylate, n-propyl acrylate, isopropyl acrylate, n-butyl acrylate, iso-butyl acrylate, t-butyl acrylate, 2-ethylhexyl acrylate, cyclohexyl acrylate, tetrahydrofurfuryl acrylate, methyl methacrylate, ethyl methacrylate, n-propyl methacrylate, iso-propyl methacrylate, n-butyl methacrylate, iso-butyl methacrylate, 2-ethylhexyl methacrylate, cyclohexyl methacrylate, tetrahydrofurfuryl methacrylate, stearyl methacrylate, and lauryl methacrylate, vinyl ethers such as methylvinyl ether, ethylvinyl ether, n-propylvinyl ether, n-butylvinyl ether and iso-butylvinyl ether, styrene compounds such as styrene and *α*-methyl styrene, nitride monomers such as acrylonitrile and methacrylonitrile, vinyl fatty compounds such as vinyl acetate and vinyl propionate, halogen-containing monomers such as vinyl chloride, vinylidene chloride, vinyl fluoride and vinylidene fluoride, olefines such as ethylene, propylene and isopropylene, dienes such as chloroprene and butadiene, and further water-soluble monomers such as vinylpyrolidone, vinylpyridine and vinylcarbazole. The present invention is not limited to the above-recited monomers. One or more kinds of the above-recited monomers may be used in a mixed state.

The polymer particles obtained by the above precipitating polymerization process, the polymer particles to be used in the seed polymerization process and/or the polymer particles obtained by the seed polymerization process are desirably cross-linked from the standpoint of thermal resistance, solvent resistance, etc.

In order to obtain the cross-linked polymer particles by the precipitating polymerization process, a polyvalent vinyl compound such as divinyl benzene, diallyl phthalate, ethylene glycol dimethacrylate, tetraallyloxy ethane, polyethylene glycol diacrylate, trimethylol propane triacrylate, and trimethylol propane trimethacrylate is used and/or a vinyl monomer 2 having a hydrolyzable silyl group, such as γ -methacryloxypropyltrimethoxy silane, γ- methacryloxypropyltriethoxy silane, γ -methacryloxypropyl-methyldimethoxy silane, γ -methacryloxypropylmethyldiethoxy silane, *γ* -acryloxypropylmethyldimethoxy silane, *γ* -methacryl-oxypropyl-bis(trimethoxy)methyl silane, 11-methacryloxy-undecamethylene-trimethoxy silane, vinyltriethoxy silane, 4-vinyltetramethylenetrimethoxy silane, 8-vinyloctamethyelene-trimethoxy silane, 3-trimethoxysilylpropylvinyl ether, vinyltriacetoxy silane, p-trimethoxysilyl styrene, p-triethoxysilyl styrene, p-trimethoxysilyl- α - methylstyrene, p-triethoxysilyl- α -methylstyrene, γ-acryloxypropyltrimethoxy silane, vinyltrimethoxy silane, N-*β* (N-vinylbenzylaminoethyl- γ -aminopropyl)trimethoxy silane hydrochloric acid salt is used and polymerized and then cross-linking is effected with siloxane bonds by hydrolysis.

In the above precipitating polymerization process, a cellulose derivative such as hydroxyethyl cellulose, hydroxypropyl cellulose or cellulose acetate butylate may be used as a dispersant to prevent association between precipitated polymer particles.

In order to obtain the cross-linked polymer particles by the seed polymerization process, the cross-linked polymer particles obtain by the above precipitating polymerization process are used as seed particles and/or the above polyvalent vinyl compound and/or vinyl monomer having the above hydrolyzable silyl group is used as a part of the vinyl monomer for swelling the seed particles and after the polymerization cross-linking is effected with siloxane bonds by hydrolysis.

As the polymerization initiator to be used for polymerizing the vinyl monomer in the above precipitating polymerizing process and/or the seed polymerizing process, mainly oil-soluble for example, peroxide type polymerization initiators such as benzoyl peroxide, methylethylketone peroxide, cumene hydroperoxide, t-butyl hydroperoxide, cyclohexanone peroxide, t-butyl peroxide, t-butyl peroxybenzoate, t-butyl peroxy-2-ethylhexanate, t-butyl peroxybivalate, t-butylperoxyneodecanoate, 3,5,5-trimethylhexanoyl peroxide, diisopropylbenzene hydroperoxide, lauroyl peroxide and dicumylperoxide, azo series polymerization initiators such as 2,2'-azobisisobutylonitrile, 2,2'-azobismethylbutyionitronitrile, 2,2'-azobis-2,4-bimethylvalelonitrile, 2,2'-azobis-2-cyclopropylpropionylnitrile, 2-2'-azobis-4-methoxy-2,4-dimethytlvalelonitrile, 1,1'-azobiscyclohexane-1-carbonitrile, 2-phenylazo-4-methoxy-2,4-dimethylvalelonitrile, and 2,2'-azobis-N,N'-dimethyleneisobutylamidine, etc. may be used.

### (Polymer particles having functional groups at surfaces thereof)

In the present invention, functional groups are introduced into surfaces of the polymer particles, and the long-chain alkyl groups are introduced into the polymer particles by reacting the polymer particles with the long-chain alkyl compound having functional groups reactable with those of the polymer particles.

The polymer particles 1 having the functional groups at the surfaces are produced by either one of the following two processes.
1. When the polymer particles are to be produced by the precipitating polymerization process or the seed polymerization process, a vinyl monomer 3 having a functional group or a monomer mixture composed of the vinyl monomer 3 having the functional group and another vinyl monomer 4.
2. The polymer particles 2 having the polymerizable vinyl groups at the surfaces are used as the polymer particles together with the vinyl monomer 3 having a vinyl group as a basepoint and a functional group or a monomer mixture composed of the vinyl monomer 3 having the functional group and another vinyl monomer 4, and graft polymerized chain polymer having the functional groups by graft polymerization.

As the given functional groups introduced into the surfaces of the polymer particles, mention may be made of functional groups such as hydroxy groups, carboxyl groups, epoxy groups, hydrolyzable silyl groups, silanol groups, isocyanate groups, amino groups, amide groups, sulfonic groups and mercapto groups, functional groups to produce the above functional groups by hydrolysis, condensation, ring opening or the like. As the above polymerizable vinyl monomer 3 having the functional group, for example, hydroxyl group-containing monomers such as 2-hydroxyethylmethacrylate, 2-hydroxyethylacrylate, 2-hydroxypropylmethacrylate, 2-hydroxypropylacrylate, allyl alcohol, polyethylene glycol monomethacrylate and polypropylene glycol monomethacrylate, α , β -unsaturated carboxylic acids, such as acrylic acid, methacrylic acid, itaconic acid, maleic acid, crotonic acid, atrophic acid and citraconic acid, carboxylic group-containing monomers such as 2-acryloyloxyethyl succinic acid, 2-acryloyloxyethyl phthalic acid, 2-acryloyloxyethyl hexahydro phthalic acid, 2-methacryloyloxyethyl succic acid, 2-methacryloyloxyethyl phthalic acid and 2-methacryloyloxyethyl hexahydrophthalic acid, epoxyl group-containing monomers such as glycidyl acrylate, glycidyl methacrylate and glycidyl allyl ether, hydrolysable silyl group-containing monomers such as γ -methacryloxypropyltrimethoxy silane, γ -methacryloxypropyltriethoxy silane, γ - methacryloxypropylmethyldimethoxysilane, γ-methacryloxypropylmethyldiethoxy silane, γ -acryloxypropylmethyldimethoxy silane, γ -methacryloxypropylbis(trimethoxy)-methyl silane, 11-methacryloxyundecamethylene trimethoxy silane, vinyltriethoxy silane, 4-vinyltetramethylenetrimethoxy silane, 8-vinyloctamethylenetrimethoxy silane, 3-trimethoxysilylpropylvinyl ether, vinyltriacetoxy silane, p-trimethoxysilyl styrene, p-triethoxysilyl styrene, p-trimethoxysilyl- α -methylstyrene, p-triethoxysilyl- α-methylstyrene, γ -acryloxypropyltrimethoxy silane, vinyltrimethoxy silane, N- *β* (N-vinylbenzylaminoethyl- γ -aminopropyl)trimethoxy silane hydrochloric acid salt and vinyltrichloro silane, isocyanate group-containing monomers such as acryloylisocyanate, methacryloylisocyanate, acrylisocyanate, m-isopropenyl- α , α-dimethylbenzylisocyanate, amino group-containing monomers such as dimethylaminoethyl methacrylate, dimethylaminoethyl acrylate, dimethylaminopropyl methacrylate, and dimethylaminopropyl acrylate, amide group-containing monomers such as acrylamide, methacryl amide, diacetone acrylamide, N-vinylformamide and N-vinylacetoamide, sulfonic group-containing monomers such as p-sulfonic acid styrene, 2-(acryloylamino)-2-methylpropane sulfonic acid, and mercapto group-containing monomers such as mercaptopropyltrimethoxy silane, mercaptopropyltriethoxy silane, and mercaptopropylmethyltrimethoxy silane, etc.

The other vinyl monomer 4 to be used in the above two processes is a vinyl monomer copolymerizable with the vinyl monomers 3 having the above functions. As such a vinyl monomer 4, for example, mention may be made of methyl acrylate, ethyl acrylate, n-propylacrylate, iso-propyl acrylate, n-butyl acrylate, iso-butyl acrylate, t-butyl acrylate, 2-ethylhexyl acrylate, cyclohexyl acrylate, tetrahydrofurfuryl acrylate, isobornyl acrylate, isoamyl acrylate, octyl acrylate, isooctyl acrylate, lauryl acrylate, stearyl acrylate, benzyl acrylate, nonylphenoxyethyl acrylate, β-(perfluorooctyl)ethyl acrylate, methyl methacrylate, ethyl methacrylate, n-propyl methacrylate, iso-propyl methacrylate, n-butylmethacylate, iso-butyl methacryalte, t-butyl methacrylate, 2-ethylhexyl methacrylate, stearyl methacrylate, lauryl methacrylate, isobornyl methacrylate, octyl methacryalte, isooctyl methacrylate, cetyl methacrylate, behenyl methacylate, isodecyl methacrylate, tridecyl methacrylate, cyclohexyl methacrylate, tetrahydrofurfuryl methacrylate, benzyl methacrylate, 2,2,2-trifluoroethyl methacrylate, 2,2,3,3-tetrafluoropropyl methacrylate, 2,2,3,4,4,4-hexafluorobutylmethacylate, *β-*(perfluorooctyl)ethyl methacrylate, methoxypolyethylene glycol monomethacylate, methylvinyl ether, ethylvinyl ether, n-propylvinyl ether, n-butylvinyl ether, iso-butylvinyl ether, styrene, α - methylstryrene, acrylonitrile, methacrylonitrile, vinyl acetate, vinyl chloride, vinylidene chloride, vinyl fluoride, vinylidene fluoride, ethylene, propylene, isoprene, chloroprene, butadiene, etc.

Two or more kinds of the above vinyl monomers 3 and 4 may be used.

As mentioned above, the cross-linked polymer particles 3 are recited as a preferable polymer particles according to the present invention. In order to produce the cross-linked polymer particles, as mentioned above, the vinyl monomer 2 having the polyvalent vinyl compound or hydrolyzable silyl group is used as a part of the vinyl monomer 4.

Although the polymerization initiator is used to polymerize the polymer particles 1 having the functional groups at their surfaces. As the polymerization initiator, the same initiator and the same association-preventing agent as used in the polymerization of the vinyl monomer in the above precipitating polymerization process and/or the seed polymerization process are used as the above polymerization initiator.

### (Polymer particles 2 having the polymerizable vinyl groups at their surfaces)

In order to produce the polymer particles having the polymerizable vinyl groups at their surfaces in the above process 2, polymerizable vinyl groups are introduced into the polymer particles produced in the above process 1 by reacting the monomer 5 having the functional group polymerizable with those at the surfaces of the polymer particles 1 with these polymer particles 1. As the vinyl monomer having such a functional group, for example, mention may be made of acryloylisocyanate, methacryloylisocyanate, acrylisocyanate, m-isopropenyl- *α , α* -dimethylbenzylisocyanate, methacryloylchtoride, vinylbenzylchloride, vinytbenzylbromide, 2-hydroxyethyl acrylate, 2-hydroxypropyl acrylate, 2-hydroxyethyl methacrylate, 2-hydroxypropyl methacrylate, acrylic acid, 2-acryloyloxyethy succinic acid, 2-acryloyloxyethyl phthalic acid, 2-acryloyloxyethylhexahydro phthalic acid, 2-methacryloyloxyethyl succinic acid, and glycidyl methacrylate, etc..

Two or more kinds of the above vinyl monomers may be used. The above vinyl group-introducing reaction is effected in an organic solvent, such as methylethyl ketone, methyisobutyl ketone or cyclohexanone, in which the above vinyl monomer 5 is soluble and the above polymer particles 1 are disperable, by using an acidic catalyst or an alkaline catalyst if desirable.

### (Polymer particles 3 having the graft polymer chains at their surfaces)

In order to produce the polymer particles 3 having the graft polymer chains at their surfaces, the above vinyl monomer 3 or a monomer mixture composed of the above vinyl monomer 3 and the vinyl monomer 4 are graft polymerized by using the vinyl groups of the above polymer particles 2 having the polymerizable vinyl groups at the surfaces as base points. Tow or more kinds of the vinyl monomers 3 or the vinyl monomers 4 may be used.

The above graft polymerization is effected by using the same polymerization initiator as used in the production of the polymer particles 1 and 2 in the presence of an organic solvent, for example, alcoholic solvent such as methanol, ethanol, iso-propanol, n-butanol, iso-butanol, t-butanol or cyclohexanol, a ketone solvent such as acetone, methylethyl ketone, methyl isobutyl ketone or cyclohexanon, an esteric solvent such as ethyl acetate, n-butyl acetate or amyl acetate, an aromatic solvent such as benzene, toluene or xylene, or a cellosolve solvent such as cellosolve acetate, methylcellosolve, ethylcellosolve or n-butylcellosolve.

Although the graft polymer chains having the functional groups are formed at the surfaces of the polymer particles 3 as mentioned above. According to the present invention, it may be that vinyl groups are further introduced into the functional groups of the above graft polymer chains by reacting the vinyl monomer 5 having the functional group reactable with the that of the graft polymer chains, and a secondary graft polymer chains having functional groups are formed by further graft polymerizing the above vinyl monomer 3 or the monomer mixture of the above vinyl monomer 3 and the above vinyl monomer 4 to the resulting polymer particles through using the vinyl groups as base points, or further third or succeeding graft polymer chains are formed in the same manner.

The glass transition point of the above graft polymer chains and those of the secondary and succeeding graft polymer chains are preferably not more than 80°C.

### (Introduction of long-chain alkyl groups)

The polymer particles 5 having long-chain alkyl groups at the surfaces and constituting the spacer for the liquid crystal display element according to the present invention are obtained by introducing long-chain alkyl groups into the polymer particles 3, 4 having the functional groups at the surfaces as produced above, through reacting a long-chain alkyl compound having a functional group reactable with those of the polymer particles with the particles 3, 4. As the long-chain alkyl compound, for example, mention may be made of a long-chain alkyl carbonic acid, a long-chain alkyl alcohol, a long-chain alkyl sulfonic acid; a long-chain alkyl amine, a long-chain alkyl methoxysilane, a long-chain alkyl chloride, a long-chain bromide, a long-chain alkyl glycidyl, or salts of the long-chain alkylcarbonic acid or the long-chain alkylsulfonic acid mentioned above. As the above long-chain alkyl group, a straight-chain alkyl group having 6 or more carbons is preferable, a straight-chain alkyl group having 12 or more carbons is more preferable, and a straight-chain alkyl group having not less than 12 to not more than 22 carbons is further more preferable, and a straight-chain alkyl group having 18 carbons is further more preferable. The long-chain alkyl group preferably has no substituted group from the standpoint of orientation stability.

The above long-chain alkyl group-introducing reaction is effected in the presence of an organic solvent, for example, a ketone solvent such as methylethyl ketone, methylisobutyl ketone or cyclohexanone, anesteric solvent such as ethyl acetate, n-butyl acetate or amyl acetate or an aromatic solvent such as benzene, toluene or xylene, by using an acidic catalyst or an alkaline catalyst if desired.

The polymer particles 5 in the present invention have a layer composed of the long-chain alkyl groups at the surface. When such polymer particles 5 are used as a spacer for the liquid crystal display element, liquid crystal molecules are regularly vertically arrayed with respect to the layers of the long-chain alkyl groups at the surfaces of the polymer particles 5. As a result, disturbance of the orientation of the liquid crystal molecules near the liquid crystal spacer particles is controlled.

When the graft polymer chains exist at the surfaces of the polymer particles 5, adhesion of the spacer to the liquid crystal display element is improved. Such adhesion largely increases at a glass transition point of the graft polymer chains of not more than 80°C , preferably not more than 60°C , and more preferably not more than 40°C. Further, if the secondary or succeeding graft polymer chains exist at the surfaces of the polymer particles 5, the thickness of the layer of the graft polymer chains covering the polymer particles 5 increases to enhance the above adhesion.

The spacer in the first aspect of the present invention will be explained below as to the shape and in the form of a colored spacer and a fixed spacer, and in case that the spacer is used for a liquid crystal display element. The explanation is also applicable to the spacers in the second and third aspects of the present invention mentioned later.

The shape of the spacer particles is preferably spherical, for example. The diameter is preferably in a range of 0.1 to 100 *µ*m, particularly preferably in a range of 0.5 to 50 µ m, more preferably in a range of 1 to 20 µ m. The layer of the long-chain alkyl groups held at the surface of the polymer particle ("polymer layer" in the third aspect) is preferably not less than 0.01 *µ* m to not more than 0.4 *µ*m.

The colored spacer for the liquid crystal display element according to the present invention is obtained by coloring. For example, coloring may be effected by mixing a dye or a pigment, polymerizing a dye monomer, or forming a metallic thin films on the spacer particles and oxidizing them. The coloring methods are disclosed, for example, in JP-A-57 189117, JP-A-63 89890, JP-A-1 144021, JP-A-1 144429, JP-A-63 66228, JP-A-63 89408, JP-A-1 200227, JP-A-2 214781, JP-A-5 301909 and JP-A-7 11005.
The coloring methods disclosed in them may be used in the present invention. For example, particles are dyed by using a anthraquinone dye or the like in JP-A-1 144429, and particles are dyed by using osmium or the like in JP-A-7 11005.

In the present invention, the reason why the colored spherical spacer particles are preferably used as the spacer for the liquid crystal display spacer is as follows.

In the liquid crystal display element, an image is formed when the liquid crystals optically change upon application of voltage between transparent electrodes. To the contrary, the spacer does not optically change upon the application of the voltage. Therefore, when the image is displayed, non-colored spacer particles are visually observed as bright points in a dark portion with the result that the contrast in image displaying may be deteriorated.

The adhesive spherical spacer for the liquid crystal display element according to the present invention has adhering property when heated. In order to afford the spacer with the adhering property, the thickness of the layers of the long-chain alkyl groups held at the surfaces of the polymer particles ("polymer layers" in the third aspect) is increased. The adhering property can be afforded upon the spacer by setting the above thickness to not less than 0.01 µ m, preferably not less than 0.04 *µ* m.

The adhering layers are softened by heating the adhering spherical spacer so that the contacting area of the spacer to be adhered upon the substrate may increase. With increase in the thickness of the adhering layers, the contacting area increases to exhibit the adhering force.

If the long-chain alkyl group layers contain functional groups (for example, epoxy groups) as orientation-controlling films which chemically bond to a reaction residue of a polyimide, the adhering layers exhibit firmer adhesion force.

If the adhering spherical spacer is used as the spacer for the liquid crystal display element, the movement of the spacer in a gap between the substrates can be prevented. As a result, an undesirable phenomenon that the orientation-controlling films are damaged can be positively prevented to enhance the quality of the displayed image and the accuracy of the gap between the substrates. Fine base particles to be used for the colored spherical spacer and the adhering spherical spacer can be produced from the above-mentioned spacer.

### Liquid crystal display element

Next, one example of the liquid crystal display element according to the present invention will be briefly explained. The liquid crystal display element can have the same construction as conventionally used except that the above spherical spacer is used.

That is, the liquid crystal display element A includes a pair of substrates 7, 9, a spacer 8 and a nematic liquid crystal 11 arranged between a pair of the substrates 7, 9 and adapted for keeping a gap between a pair of the substrates 7, 9, a sealing member 10 filled at a peripheral portion between a pair of the substrates 7, 9, and polarizer sheets 12, 13 coated upon the surfaces of the substrates 7, 9. The substrates 7, 9 are each constituted by forming a pattern of a transparent electrode 2, 5 made of an ITO (Indium-Tin-Oxide) film on one surface of a transparent substrate 1, 4 made of glass, and covering the surfaces of the transparent electrode 2, 5 and the transparent substrate 1, 4 with an orientation-controlling film 3, 6 made of a polyimide film or the like. The orientation-controlling films 3, 6 are subjected to an orientation-controlling treatment with lapping.

Thus, according to the present invention, the liquid crystal display element affording a clear image with no defect in the displayed image can be obtained.

### (Examples)

### Example 1-1 (Production of polymer particles 1 A having -SiOH at surfaces)

Thirty grams of hydroxypropyl cellulose having the molecular weight of 1.0 × 10⁵ was dissolved into 250 g of ethyl alcohol, which was charged into a reactor. Into the reactor were further charged 8g of styrene monomer, 4 g of γ -methacryloxypropyltrimethoxy silane and 0.1 g of 2,2'-azobisisobutylonitrile. Precipitation polymerization was effected at 65°C in nitrogen stream for 10 hours, thereby obtaining uniform polymer particles having the average particle diameter of 5.8 *µ* m and a standard deviation of 1.5 %.

After the polymer particles were separated and washed, they were treated with an acid or an alkali. Thereby, cross-linked polymer particles 1 A in which cross-linking with Si-O-Si siloxane bonds existed and at which surfaces silanol groups (Si-OH) existed were produced.

### Example 1-2 (Production of polymer particles 1 B having -OH groups at their surfaces)

Two grams of n-butyl peroxide was emulsified and finely dispersed in 20 g of water having 0.15 g of sodium lauryl salfate dissolved therein such that diameters of oily drops were not more than 0.5 *µ* m. The above polymerization initiator dispersed liquid was fed to 40 g of an aqueous dispersion liquid having 5 % by weight of polystyrene particles (particle diameter: 1.2 *µ* m, and a seed particle-dispersed liquid was obtained by absorbing said oily drops of the polymerization initiator onto the polystyrene particles under slow stirring at 30°C for 12 hours.

Next, a monomer mixture consisting of 45 g of styrene, 15 g of 2-hydroxypropyl methacrylate was emulsified and dispersed into and 350 g of divinylbenzen having 2.85 g of sodium lauryl salfate dissolved therein, and the above seed particle-dispersed liquid was added and mixed not the monomer mixture-dispersed liquid, thereby absorbing the monomer mixture upon the seed particles. Then, 100 g of a 10 wt% aqueous solution of polyvinyl alcohol was added into the resulting dispersed liquid, and the monomer mixture absorbed onto the seed particles were polymerized by heating at 80°C. The monomer mixture disappeared 6 hours after the heating, and uniformly just spherical polymer particles 1 B having the average particle diameter of 7 *µ*m, a standard deviation of 4.5 % and -OH groups at the surfaces thereof were obtained.

### Example 3 (Production of polymer particles 1 C having -COOH groups at their surfaces)

Fifty grams of hydroxypropyl cellulose having the molecular weight of 4 x 10⁵ was dissolved into 300 g of methyl alcohol, which was charged into a reactor. Into the reactor were further charged 10 g of styrene, 5 g of divinylbenzene, 2 g of methacrylic acid and 0.2 g of 2,2'-azobisisobutylonitrile. Precipitation polymerization was effected at 60°C in nitrogen stream for 8 hours, thereby obtaining uniform just spherical polymer particles 1 C having the average particle diameter of 6.25 µ m, a standard deviation of 3 % and -COOH groups at the surfaces.

### Example 1-4 (Production of polymer particles 1D having epoxy groups at their surfaces)

Two hundreds grams of ethyl propionate was charged into a reactor. To this reactor was further charged 85.7 g of glycidyl methacrylate, 9.7 g of 2-hydroxyethyl methacrylate, 4.6 g of ethylene glycol dimetahcrylate and 0.15 g of azobis(2,4-dimethylvaleronitrile), and the mixture was subjected to the precipitation polymerization at 50°C in nitrogen stream for 16 hours, thereby obtaining just spherical polymer particles having the average particle of 4.9 *µ* m, a standard deviation of 5.0 % and epoxy groups at the surfaces.

### Example 1-5 (Production of polymer particles 1 D having amino groups at their surfaces)

Thirty grams of toluene and 10 g of hexamethylene diamine were added to 10 g of the polymer particles produced in Example 1-4 and having the epoxy groups at the surfaces in a reactor, and the mixture was reacted at 80 to 90°C for 3 hours. Thereby, polymer particles 1 E having amino groups at the surfaces were obtained.

### Example 1-6 (Production of polymer particles 1F, 1 G, 1 H and 1I having polymerizable vinyl groups at their surfaces)

Ten grams of each of the polymer particles 1A, 1B, 1C and 1 E produced by Examples 1-1 to 1-3 and 1-5 and having active hydrogens such as silanol groups, -OH groups, -COOH groups and amino groups at their surfaces, respectively, was charged together with 20 g of methylethyl ketone and 3 g of methacryloylisocyanate, and the mixture was reacted at room temperature for 30 minutes. Thereby, polymer particles 1F, 1G. 1 H and 1 I having polymerizable vinyl groups at their surfaces were obtained.

### Example 1-7 (Production of polymer particles 1J having polymerizable vinyl groups at their surfaces)

One hundred grams of cyclohexanone, 5 g of methacrylic acid and 0.5 g of hydroquinone were charged to 10 g of the polymer particles 1 D produced in Example 1-4 and having the epoxy groups at their surfaces in a reactor, and the mixture was reacted under reflux for 4 hours. Thereby, polymer particles 1J having polymerizable vinyl groups at their surfaces.

### Example 1-8 (Production of polymer particles 1 K and 1 L having polymerizable vinyl groups at their surfaces)

Ten grams of each of the polymer particles 1B and 1 E produced by Examples 1-2 and 1-5 and having -0H groups and amino groups at their surfaces, respectively, was charged together with 20 g of tetrahydrofuran and 5 g of methacryloylchloride, and the mixture was reacted at room temperature for 3 hours. Thereby, polymer particles 1 K and 1 L having polymerizable vinyl groups at their surfaces were obtained.

### Examples 1-9 (Formation of graft polymer chains having functional groups)

One gram of each of the polymer particles 1F, 1G, 1H, 1I, 1J, 1K and 1 L produced by Examples 1-6 to 1-8, respectively and having the polymerizable vinyl groups at their surfaces was dispersed in 20 g of methylethyl ketone. To the mixture were added 0.1 g of benzoyl peroxide and a vinyl monomer 3 and a vinyl monomer 4 shown in Table 1, and graft polymer chains having functional groups at the surfaces of the polymer particles were formed by heating at 80°C for one hour (Polymer particles 1 F-1, 1 G-1, 1 H-1, 1I-1, 1 J-1, 1 K -1 and 1 L having the graft polymer chains at their surfaces)

**Table 1**

| Sample No. | Polymer particles | Vinyl monomer 3 | | Vinyl monomer 4 | |
|---|---|---|---|---|---|
| 1 F-1 | 1 F | methacrylic acid | 5 g | methacrylmethacrylate | 15 g |
| 1G-1 | 1 G | 2-hydroxyethyl methacrylate | 7 g | methyl methacrylate | 13 g |
| 1H-1 | 1H | N-vinylacetamide | 10 g | PE-350 (manufactured by NOF Corporation) | 20 g |
| 1l-1 | 1l | glycidyl methacrylate | 10 g | PE-350 (manufactured by NOF Corporation) | 10 g |
| 1J-1 | 1J | acrylamide | 5 g | PE-350 (manufactured by NOF Corporation) | 15 g |
| 1K-1 | 1K | γ -methacryloxypropyl trimethoxysilane | 5 g | PE-350 (manufactured by NOF Corporation) | 15 g |
| 1L-1 | 1L | parasulfonic acid styrene | 10 g | methyl methacrylate | 10 g |

Each of the polymer particles 1 F-1, 1 G-1, 1 H-1, 11-1, 1 J-1. 1 K-1 and 1 L having the graft polymer chains at their surfaces and formed with the graft polymer chains was separated from the reaction liquid. The functional groups existing at the surfaces of each of the polymer particles are shown in Table 2.

**Table 2**

| Polymer particles | Functional group |
|---|---|
| 1F-1 | carboxylic group |
| 1G-1 | hydroxyl group |
| 1H-1 | acetamide group |
| 1I-1 | epoxy group |
| 1J-1 | amide group |
| 1K-1 | trimethoxysilane group |
| 1L-1 | sulfonic group |

The observation of each of the polymer particles 1 F-1, 1 G-1, 1 H-1, 1I-1, 1 J-1, 1K-1 and 1L-1 with an SEM revealed that increase in the particle diameter from each of the polymer particles 1 F, 1 G, 1 H, 1I, 1 J, 1 K and 1 L was 0.03 *µ* m.

### Example 1-10 (Formation of graft polymer chains having amino groups at surfaces of the polymer particles)

Thirty grams of methanol and 3 g of sodium hydroxide were charged to 10 g of the polymer particles 1 H-1 produced in Example 1-9 and possessing the graft polymer chains with the acetamide groups at their surfaces in a reactor, and the mixture was reacted at a reflux temperature for 6 hours. Thereby, polymer particles 1 H-2 having amino groups at the surfaces were obtained.

### Example 1-11 (Formation of graft polymer chains having silanol groups at the surfaces of the polymer parties)

Thirty grams of methanol and 3 g of sodium hydroxide were charged to 10 g of the polymer particles 1 K-1 produced in Example 1-9 and possessing the graft polymer chains with the trimethoxy silane groups at their surfaces in a reactor, and the mixture was reacted at a reflux temperature for 2 hours. Thereby, polymer particles 1 K-2 having silanol groups at the surfaces were obtained.

### Example 1-12 (Introduction of long-chain alkyl groups into the surfaces of the polymer particles)

Twenty grams of cyclohexanone and 3 g of a long-chain alkyl (C₁₂ or C₁₃) glycidyl were charged to 10 g of each of the polymer particles 1F-1, 1J-1, 1L-1 and 1 H-2 produced in Examples 1-9 and 1-10 and having carboxylic groups, amido groups, sulfonic groups and amino groups at their surfaces, respectively, in a reactor, and the mixture was reacted at a reflux temperature for 5 hours. Thereby, polymer particles 1 M, 1 N, 1O and 1P having the long-chain alkyl groups introduced at their surfaces were obtained.

### Example 1-13 (Introduction of long-chain alkyl groups into the surfaces of the polymer particles)

Twenty grams of cyclohexanone and 5 g of palmitic acid were charged to 10 g of the polymer particles 1I-1 produced in Example 1-9 and having epoxy groups at their surfaces in a reactor, and the mixture was reacted at a reflux temperature for 5 hours. Thereby, polymer particles 1Q having the long-chain alkyl groups introduced at their surfaces were obtained.

### Example 1-14 (introduction of long-chain alkyl groups into the surfaces of the polymer particles)

Thirty grams of toluene, 5 g of stearyl halide and 1 g of triethyl amine were charged to 10 g of each of the polymer particles 1F-1, 1G-1, 1 L-1, 1K-2 and 1H-2 produced in Examples 1-9 to 1-11 and having carboxylic groups, hydroxyl groups, sulfonic groups, silanol groups and amino groups at their surfaces, respectively, in a reactor, and the mixture was reacted at a reflux temperature for 6 hours. Thereby, polymer particles 1R, 1S, 1T, 1 U and 1 V having the long-chain alkyl groups introduced at their surfaces were obtained.

### Example 1-15 (Introduction of secondary, third, ··· graft polymer chains)

Long-chain alkyl groups may be introduced into the surfaces of each of the polymer particles 1F-1, 1G-1, 1 H-1, 1I-1, 1J-1, 1K-1, 1 L-1, 1 H-2 and 1 K-2 produced in Examples 1-9 to 1-11 and formed with the graft polymer chains having the functional groups at their surfaces by reacting long-chain alkyl halide or long-chain alkyl carboxylic acid with each of these polymer particles at it is. If necessary, after polymerizable vinyl groups are further introduced into the graft polymer chains in the same manner as in Examples 1-6 to 1-8, secondary graft polymer side chains having the same functional groups as those of the primary graft polymer side chains may be introduced in the same manner as in Examples 1-9 to 1-11. After the secondary graft polymer side chains are introduced in this way, an SEM observation revealed that the particle diameter of each polymer particle was increased by 0.3 *µ* m. Similarly, third, fourth, ... graft polymer side chains may be introduced.

Long-chain alkyl groups can be introduced into each of the polymer particles having the secondary, third, fourth graft polymer side chains introduced into their surfaces, respectively in the same manner as in Examples 1-12 to 1-14.

### (Evaluations)

Light passing was evaluated with respect to the polymer particles having the long-chain alkyl groups introduced at their surfaces.

### Evaluation methods

### 1. Substrate

Substrates each having an ITO/polyimide orientation-controlling film formed on the surface, followed by lapping were used (90 x 100 mm, manufactured by EHC Co., Ltd.).

### 2. Spraying of spacers

Each of the polymer particles M to V and F-1 to K-2 were sprayed as a spacer onto the substrate at a rate of 150 to 180 particles sprayed per mm² by using a spray gun at pressure of 3 kg/cm², followed by fixing under heat treatment at 150°C for 30 minutes.

### 3. Liquid crystals

ZLI-2420 (S080): Δ n 0.141, viscosity 17 mm²/sec., pitch 12 *µ*m and Tn-i = 85°C (manufactured by Merk) was used.

### 4. DC voltage generator

R-8340A (manufactured by Advantest Co., Ltd.) was used.

### 5. Fixed rate (%)

### Measurement of a fixed rate

After spraying and heat treatment mentioned above, nitrogen was below against the substrate apart from a distance of 6 mm at 1 kg/cm² through an air gun having an opening diameter of 1.7 mm, and a fixed rate was calculated based on a residual percentage between before and after the blowing.

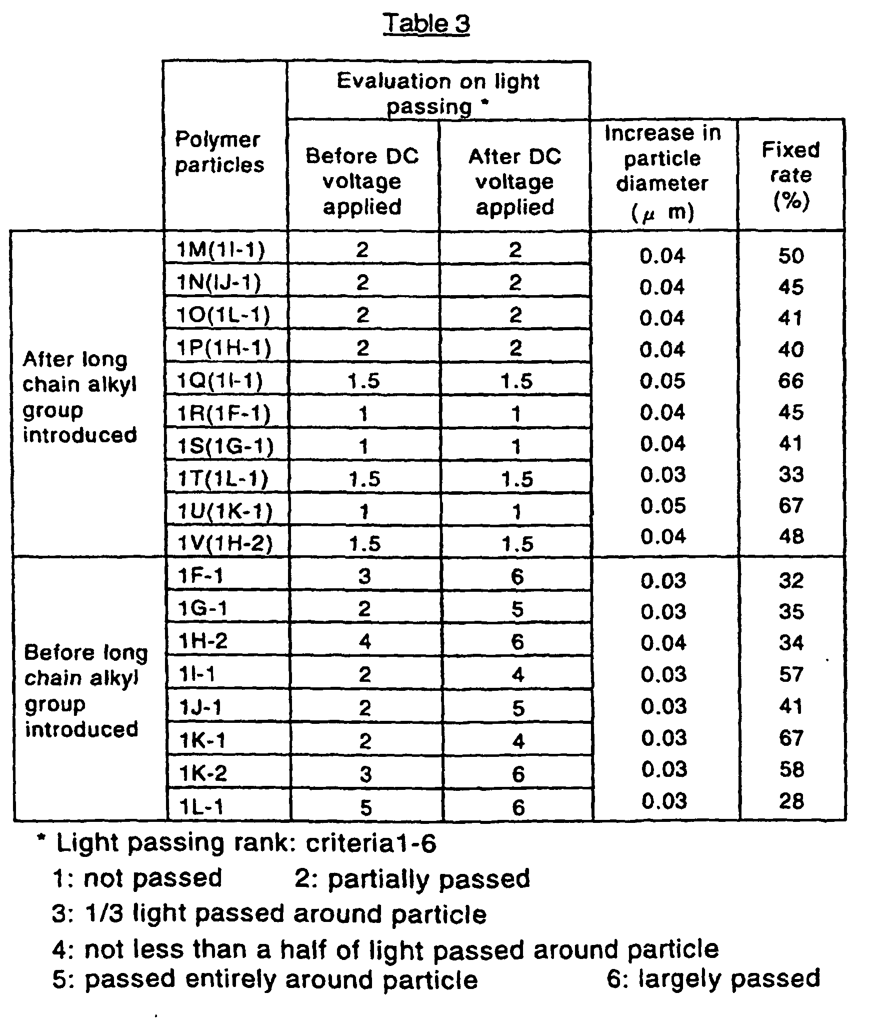

From the above evaluation results, the evaluation ranks of the light passing upon the application of DC voltage of the polymer particles 1F-1, 1G-1, 1I-1, 1J-1, 1L-1, 1K-2 and 1H-2 having no long-chain alkyl groups introduced into the surfaces were 4 to 6, whereas those of the light passing upon the application of DC voltage of the polymer particles 1M. 1 N, 1O, 1P, 1Q, 1 R, 1S, 1 T, 1 U and 1 V having long-chain alkyl groups introduced into the surfaces were 1 to 2.
Owing to the introduction of the long-chain alkyl groups, no difference existed between before and after the application of DC voltage, and the light passing phenomenon was largely improved.

Next, the spacer for the liquid crystal according to the second aspect of the present invention which spacer is made of the polymer particles having the graft polymer chains with the long-chain alkyl groups introduced at the surfaces will be explained.
The spacer for the liquid crystal is produced by introducing one or more kinds of polymerizable vinyl monomers having the long-chain alkyl groups or a mixture of one or more kinds of the polymerizable vinyl monomers having the long-chain alkyl groups and one or more kinds of other polymerizable vinyl monomers copolymerizable with the former ones into the surfaces of the polymer particles having radical chain transferable functional groups and/or active groups having radical polymerization initiating ability introduced into the surfaces thereof.

### (Polymer particles having given functional groups at their surfaces)

In order to produce the polymer particles having radical chain transferable functional groups and/or active groups having radical polymerization initiating ability introduced into the surfaces thereof and adapted to be used for the production of the spacer for the liquid crystal according to the present invention, polymer particles having at their surfaces functional groups into which the above functional groups are to be introduced are first produced. As a desirable process for producing the polymer particles having given functional groups at their surfaces, mention may be made of a precipitation polymerization process in which the monomer is polymerized in a solvent which dissolves the monomer but does not dissolve the polymer based on the above functional groups to precipitate the polymer particles and a seed polymerization process in which the polymer particles obtained by the above precipitation polymerization process are swelled with a monomer and secondary polymer particles are obtained by further polymerizing this monomer with radicals contained in the polymer particles. When the polymer particles are to be produced by the above production processes, a polymerizable vinyl monomer having given functional groups at the surface or a monomer mixture composed of the polymerizable vinyl monomer having the given functional groups and other polymerizable vinyl monomer copolymerizable with the former polymerizable vinyl monomer is used.

As the given functional groups introduced in the above processes, mention may be made of functional groups such as hydroxyl groups, carboxyl groups, epoxy groups, hydrolyzable silyl groups, silanol groups, isocyanate groups, amino groups, amide groups, sulfonic groups and mercapto groups, functional groups to produce the above functional groups by hydrolysis, condensation, ring opening or the like. As the polymerizable vinyl monomers having the above functional groups, the ones mentioned before may be recited.

As another polymerizable vinyl monomer copolymerizable with the former polymerizable vinyl monomer having the above functional groups and adapted to be used in the present production processes, the same kinds as mentioned before may be used. When cross-linked polymer particles are to be obtained in the precipitating polymerizatin or the seed polymerization, the same polyvalent vinyl compound and/or the same hydrolyzable silyl group-containing monomer as mentioned before may be used. Further, in the precipitation polymerization process, the above-mentioned association-preventing dispersant may be used.

In the precipitation polymerization and the seed polymerization, particles having a just spherical shape and a uniform particle size distribution which are suitable as a spacer for the liquid crystal are obtained, and just spherical particles having large particle diameters are obtained particularly in the seed polymerization.

### (Polymer particles having radical chain transferable functional groups introduced into the surfaces)

In order to produce polymer particles having radical chain transferable functional groups introduced into the surfaces, the radical chain transferable functional groups are introduced into the surfaces of the polymer particles as produced by the above processes and having the given functional groups at the surfaces by effecting a reaction between the polymer particles and a compound having a functional group reactable with said functional groups, for example, a compound having a radical chain transferable functional group such as a polymerizable vinyl group or a mercapto group.

### (polymer particles having the active groups having the radical polymerization initiating ability at their surfaces)

In order to produce the polymer particles having the active groups having the radical polymerization initiating ability introduced into their surfaces, the active groups having the radical polymerization initiating ability are introduced into the surfaces of the polymer particles as produced in the above processes and having the given functional groups by reacting an initiator having a functional group reactable with said given functional groups, such as peroxide, perhydride or an azo compound with the polymer particles. Alternatively, the active groups having the radical polymerization initiating ability are introduced into the surfaces of the polymer particles by using and graft polymerizing polymer particles having radical chain transferable functional groups introduced into their surfaces in the presence of a polymerizable vinyl monomer having a peroxide group or the like or a mixture of said polymerizable vinyl monomer and another polymerizable vinyl monomer copolymerizable with said former polymerizable vinyl monomer as a polymerization initiator while said radical chain transferable functional groups at the surfaces of the polymer surfaces are used as starting points.

### (Formation of graft polymer chains having long-chain alkyl groups)

Graft polymer chains having long-chain alkyl groups are introduced into the surfaces of the graft polymer particles produced above and having the radical chain transferable functional groups or the active groups having the radical polymerization initiating ability introduced into their surfaces by graft polymerizing a polymerizable vinyl monomer having a long-chain alkyl group or a mixture of this polymerizable vinyl monomer having the long-chain alkyl group and another polymerizable vinyl monomer copolymerizable with the former polymerizable vinyl monomer with said polymer particles with or without use of a polymerization initiator.

As the polymerizable vinyl monomer having the long-chain alkyl group, a polymerizable vinyl monomer having a long-chain alkyl group with six or more carbons is preferable, and a polymerizable vinyl monomer having a long-chain alkyl group with twelve or more carbons is particularly preferable. As such polymerizable vinyl monomers having long-chain alkyl groups, for example, mention may be made of 2-ethylhexyl acrylate, stearyl acrylate, lauryl acrylate, isostearyl acrylate, isostearyl methacrylate, octyl acrylate, isooctyl acrylate, nonylphenoxyethyl acrylate, nonylphenol 10EO acrylate, laurylpolyoxyethylene acrylate, octylphenol polyoxyethylene acrylate, stearylphenol polyoxyethylene acrylate, 2-ethylhexyl methacrylate, stearyl methacrylate, lauryl methacrylate, octyl methacrylate, isooctyl methacrylate, dodecyl methacrylate, cetyl methacrylate, behenyl methacrylate, isodecyl methacrylate, tridecyl methacrylate, laurylpolyoxyethylene methacrylate and polyoxyethylene allylglylcidylnonylphenyl ether, etc.

Another polymerizable vinyl monomer copolymerizable with the polymerizable vinyl monomer having the above long-chain alkyl groups, the same polymerizable vinyl monomer as used in the production of the polymer particles is employed.

If the polymer particles having the radical chain transferable functional groups introduced into the surfaces are used, radicals are generated at terminals of the functional groups through addition of the polymerization initiator, irradiation of a high energy beam such as ultraviolet beam or electron beam, or the like with the result that the polymerizable vinyl monomer having the long-chain alkyl group or a mixture of this polymerizable vinyl monomer having the long-chain alkyl group and another polymerizable vinyl monomer copolymerizable with the former one is graft polymerized, while the radicals are utilized as starting points. Further, if the polymer particles having the introduced active groups with the radical chain transferable functional groups having the introduced radical polymerization initiating ability are used, radicals are generated through decomposition of the active groups upon heating, irradiation of high energy beam or the like with the result that the polymerizable vinyl monomer having the long-chain alkyl group or a mixture of this polymerizable vinyl monomer having the long-chain alkyl group and another polymerizable vinyl monomer copolymerizable with the former one is graft polymerized, while the radicals are utilized as starting points.

In the present invention, a polymerizable vinyl monomer having given functional groups, a mixture of this polymerizable vinyl monomer having the given functional group and another polymerizable vinyl monomer copolymerizable with the former polymerizable vinyl monomer, a mixture of the polymerizablevinyl monomer having the given functional group and a polymerizable vinyl monomer having a long-chain alkyl group or a mixture of the polymerizable vinyl monomer having the given functional group, another polymerizable vinyl monomer polymerizable copolymerizable with the former polymerizable vinyl monomer and further the polymerizable vinyl monomer having the long-chain alkyl group is primarily graft polymerized to the polymer particles having the radical chain transferable functional groups and/or the active groups having the radical polymerization initiating ability introduced at their surfaces, and radical chain transferable functional groups are introduced to the given functional groups of the primarily graft polymer chains by reacting a compound having a functional group reactable with said given functional group and a radical chain transferable functional group with the given functional groups of the graft polymer chains. Alternatively, active groups having a radical polymerization initiating ability are introduced into the given functional groups of the primarily graft polymer chains by reacting an initiator reactable with a peroxide, a perhydride or an azo compound with said given functional groups. Then, secondary graft polymer chains having the long-chain alkyl groups may be introduced into the surfaces of the above polymer particles by secondarily graft polymerizing the polymerizable vinyl monomer having the long-chain alkyl groups or a mixture of this polymerizable vinyl monomer having the long-chain alkyl groups and the another polymerizable vinyl monomer copolymerizable with the former polymerizable vinyl monomer to the graft polymer chains. Further, third graft polymer chains may be introduced into the polymer particles.

The thus produced spacer for the liquid crystal according to the present invention has the graft polymer chains with the long-chain alkyl groups introduced into the surfaces. The concentration of the long-chain alkyl groups of the polymer chains can be directly and easily adjusted based on the concentration of the polymerizable vinyl monomer having the long-chain alkyl group used for the introduction of the graft polymer chains. Further, the polymerizable vinyl monomer or the polymerization initiator is not diluted, so that a high graft polymerization efficiency can be obtained. Since the graft polymer chains having the long-chain alkyl groups are covalently bonded to the polymer particle, the graft polymer chain layer of the graft polymer chains having the long-chain alkyl groups are integrated with the polymer particle, so that the layer of the graft polymer chains will not be peeled from the polymer particle. Further, if the thickness of the layer of the graft polymer chains having the long-chain alkyl groups is not less than 0.01 *µ*m, the fixing property between the polymer particles and the orienting substrate is exhibited through a melting effect of the graft polymer chains and a reaction of residues of the functional groups onto the orienting substrate.

If the polymer particles having the graft polymer chains with the long-chain alkyl groups introduced at the surfaces are used as a spacer for the liquid crystal display element, the liquid crystal molecules are vertically and regularly arranged with respect to the long-chain alkyl groups of the graft polymer chains at the surfaces of the polymer particles. Accordingly, disturbance of the orientation of the liquid crystal molecules near the liquid spacer particles can be suppressed.

### Example 2-1 (Production of polymer particles 2A having azo groups at their surfaces)

Fifty grams of dimethyl formamide and 10 g of 2,2-azobis-2-(2-imidazoline)propane were reacted with 10 g of the polymer particles 1D produced in Example 1-4 and having the epoxy groups at their surfaces at 50° C for 5 hours. Thereby, polymer particles 2A having azo groups at their surfaces were obtained.

### Example 2-2 (Production of polymer particles 2B having azo groups at their surfaces)

Ten grams of 4,4-azobis-4-cyanovaleric chloride and 10 g of triethylamine were added dropwise to 10 g of the polymer particles 1B produced in Example 1-2 and having the hydroxyl groups at their surfaces and 50g of dimethyl formamide, thereby obtaining polymer particles 2B having azo groups at their surfaces.

### Example 2-3 (Production of polymer particles 2C, 2D and 2E having graft polymer chains containing peroxide at their surfaces)

Two hundreds of methylethyl ketone, 50 g of a 70 wt% toluene solution of t-butylperoxyally carbonate, 80 g of methyl methacrylate and 0.1 g of benzoyl peroxide were all added to 10 g of each of the polymer particles 1F, 1 G and 1 H produced in Example 1-6 and having the polymerizable vinyl groups at their surfaces. The mixture was heated to 70 to 90° C in nitrogen stream, and was subjected to a graft polymerization reaction for 1 hour. Thereby, polymer particles 2C, 2D and 2E having graft polymer chains containing peroxide at their surfaces were obtained by removing the free polymer.

### Example 2-4 (introduction of graft polymer chains containing long-chain alkyl groups into the surfaces of the polymer particles)

Two hundreds of methylethyl ketone, 50 g of methyl methacrylate, 50 g of N-lauryl methacrylate and 0.5 g of benzoyl peroxide were all added to 10 g of each of the polymer particles 1 F, 1 G, 1H and 1 J produced in Examples 1-6 and 1-7 and having the polymerizable vinyl groups at their surfaces. The mixture was heated to a polymerization initiator-cleavage temperature, and was subjected to a graft polymerization reaction in nitrogen stream for 2 hours. Thereby, spacer samples 1 F-2, 1G-2, 1 H-2 and 1J-2 having graft polymer chains containing long-alkyl groups introduced at the surfaces of the polymer particles were obtained.

### Example 2-5 (Introduction of graft polymer chains containing long-chain alkyl groups into the surfaces of the polymer particles)

Two hundreds of toluene, 20 g of methyl methacrylate, 20 g of 2-hydroxybutyl methacrylate and 60 g of stearyl methacrylate were all added to 10 g of each of the polymer particles 2A and 2B produced in Examples 2-1 and 2-2, respectively and having the azo groups at their surfaces. The mixture was heated to a polymerization initiator-cleavage temperature, and was subjected to a graft polymerization reaction in nitrogen stream for 3 hours. Thereby, spacer samples 2A-1 and 2B-1 having graft polymer chains containing long-alkyl groups introduced at the surfaces of the polymer particles were obtained.

### Example 2-6 (Introduction of graft polymer chains containing long-chain alkyl groups into the surfaces of the polymer particles)

Two hundreds of xylene, 20 g of methyl methacrylate, 30 g of octyl methacrylate and 50.g of laurylpolyoxyethylene methacrylate were all added to 10 g of each of the polymer particles 2C, 2D and 2E produced in Example 2-3 and containing the peroxide groups at their surfaces. The mixture was heated to a polymerization initiator-cleavage temperature, and was subjected to a graft polymerization reaction in nitrogen stream for 3 hours. Thereby, spacer samples 2C-1, 2D-1 and 2E-1 having graft polymer chains containing long-alkyl groups introduced at the surfaces of the polymer particles were obtained.

### Example 2-7 (Production of polymer particles formed with primary graft side chains)

Thirty grams of xylene and 2 g of isocyanateethyl methacrylate were both added to 10 g of each of the graft polymer particle spacer samples 2A-1 and 2B-1 produced in Example 2-5 and having the graft polymer chains with the long-chain alkyl groups, and the mixture was subjected to a graft polymerization reaction at 80°C for 2 hours, thereby introducing vinyl groups into the graft polymer side chains.

Two hundreds of methyl cellosolve, 50 g of methyl methacrylate, 50 g of 2-hydroxypropyl methacrylate and 0.5 g of benzoyl peroxide are all added to 10 g of the polymer particles having the graft polymer chains having the vinyl groups introduced to the side chains introduced into the surfaces of the polymer particles. The mixture is heated to a polymerization initiator-cleavage temperature, and was subjected to a graft polymerization reaction in nitrogen stream for 1.5 hours. Thereby, secondary graft polymer chains having the long-chain alkyl groups as side chains of the primary graft polymer chains which were the graft polymer chains are formed. The thus produced spacer samples 2A-2 and 2B-2 are easily dispersed in an alcohol.

### Comparative Example 2-1

Ten grams of the polymer particles 1A produced in Example 1-1 and having the silanol groups at the surfaces were dispersed in 30 g of a 2 wt% toluene solution of octadecyltrimethoxy silane. The dispersion was heated at 50 ° C for one hour. The reaction product was filtered, washed and heated at 130° C in a dryer for one hour. Thereby, a comparative spacer sample 2F of the polymer particles having the long-chain alkyl groups at the surfaces was obtained.

### Comparative Example 2-2

Ten grams of commercially available silica particles having undergone no surface treatment were dispersed in 30 g of a 2 wt% toluene solution of octadecyltrimethoxy silane. The dispersion was heated at 50° C for one hour. The reaction product was filtered, washed and heated at 130° C in a dryer for one hour. Thereby, a comparative spacer sample 2F of the silica particles having the long-chain alkyl groups at the surfaces was obtained. (0096)

### (Evaluations)

Liquid crystal display elements were produced by using the above spacer samples 1 F-2, 1G-2, 1H-2, 1J-2, 2A-1, 2B-1, 2C-1, 2D-1 2E-1, 2A-2, 2B-2, 2E and 2G, and orienting abnormality around the liquid crystal spacers was observed and evaluated on lighting. Results are shown in Table 4.

### (Method for producing the liquid crystal display element)

A spacer sample was sprayed onto a substrate (90 x 100 mm, manufactured by EHC Co., Ltd.) having an ITO/polyimide orienting film formed at the surface and subjected to lapping treatment by using a spray gun such that the number of polymer particles sprayed was 50 to 180/mm², and then heat treatment was effected at 150° C for 30 minutes. Thereafter, a sealant was printed upon a peripheral portion of the substrate, and such substrates were bonded to each other by an ordinary method. An STN liquid crystal display element was produced by pouring a liquid crystal ZLI-2293 (S078W) into a cell.

### (Evaluation method)

Fifty V DC voltage was applied to each of the liquid crystal display elements produced by the above method for 1 second, and change in orienting abnormality (light passing state) around the liquid spacer between before and after the application of the voltage was evaluated. The fixing rate was evaluated in the same manner as mentioned before. A standard for evaluating the light passing is classified into the following 1 to 6.
1: no light passing, 2: partial light passing,
3: light passing around 1/3 of particles
4: light passing around not less than half of particles
5: light passing around entire particles
6: Large light passing occurred.

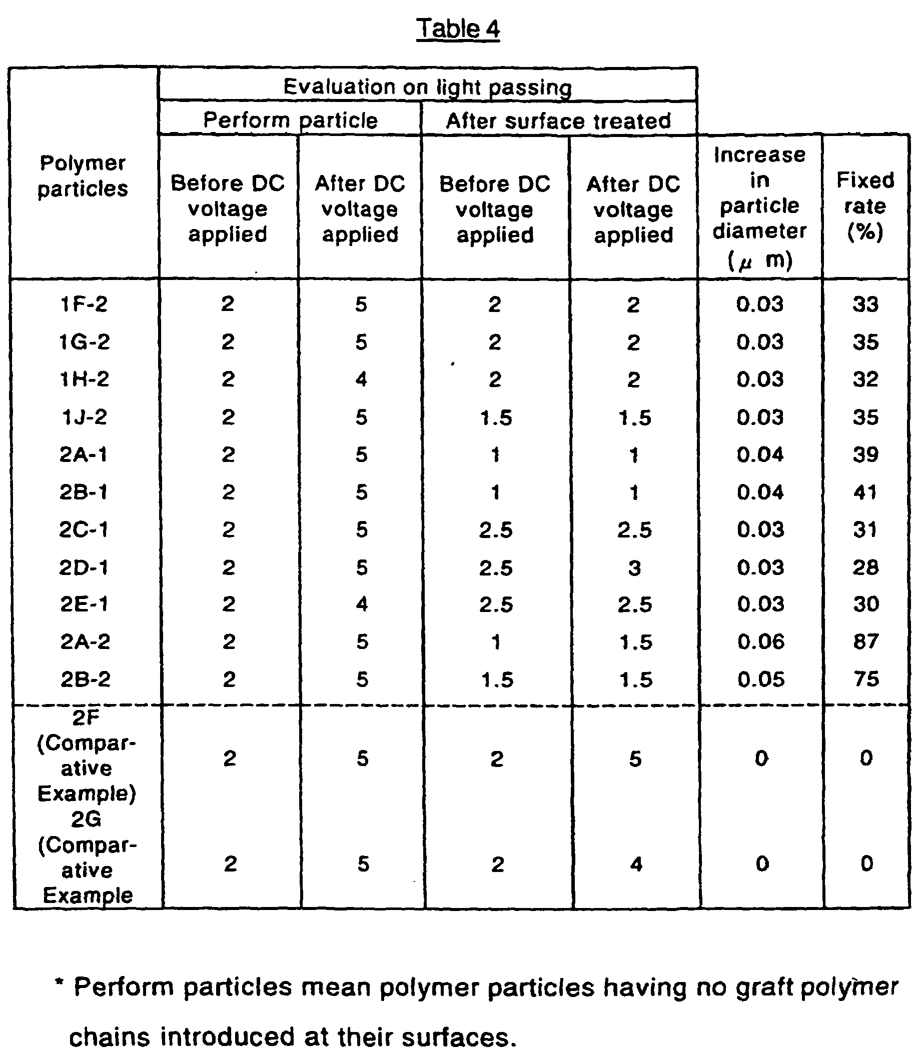

It is clear from the evaluation results in Table 4 that the spacer samples each composed of the polymer particles having the graft polymer chains with tha long-chain alkyl groups introduced into the surfaces possess remarkably improved light passing-preventing performance around the particles as compared with the perform particles into which no graft polymer chains are introduced. On the other hand, slight improvement on the light passing-preventing performance is seen with respect to the 2F and 2G using the comparative spacers having the long-chain alkyl introduced into the surfaces of the particles only by the surface treatment with the coupling agent, which is inferior to the light passing-improving effect of the graft polymer chains having the long-chain alkyl groups.

Next, the liquid crystal spacer according to the third aspect of the present invention which spacer is made of the polymer particles surface-coated with the polymer layers having the long-chain alkyl groups will be explained.

The same polymerizable vinyl monomer, the same functional groups to be introduced into the surfaces of the polymer particles and the same polymerizable vinyl monomer having said functional group as mentioned before can be used for the production of the polymer particles in concern. Further, in the precipitation polymerization and the seed polymerization, cross-linked polymer particles obtained by using a polyvalent vinyl compound and a vinyl monomer having a hydrolyzable silyl group are preferably employed as a part of the monomer as mentioned before. Further, the above dispersant for preventing the association may be used in the case of the precipitation polymerization process.

In the above precipitation polymerization and the above seed polymerization, the particles having a just spherical shape and a uniform particle size distribution which are suitable for the spacer for the liquid crystal. Particularly, as mentioned above, the just spherical particles having large particle diameters are obtained in the seed polymerization.

### (Polymer having long-chain alkyl groups)

The polymer having the long-chain alkyl groups is produced by using and polymerizing a polymerizable vinyl monomer having the long-chain alkyl group or a mixture of the polymerizable vinyl monomer having the long-chain alkyl group and another polymerizable vinyl monomer copolymerizable with the former polymerizable vinyl monomer with use of a polymerization initiator.

As to the polymerization, a solution polymerization is effected in an organic solvent, for example, alcoholic solvent such as methanol, ethanol, iso-propanol, n-butanol, iso-butanol, t-butanol or cyclohexanol, a ketone solvent such as acetone, methylethyl ketone, methylisobutyl ketone or cyclohexanon, an esteric solvent such as ethyl acetate, n-buthyl acetate or amyl acetate, an aromatic solvent such as benzene, toluene or xylene, or a cellosolve solvent such as cellosolve acetate, methylcellosolve, ethylcellosovle or n-butylcellosolve. Alternatively, the same precipitation polymerization or the same seed polymerization as used in the production of the above polymer particles may be used. As a result, the polymer having the long-chain alkyl groups is offered in the form of a solution or particles.

As the above polymerizable vinyl monomer having the long-chain alkyl group, polymerizable vinyl monomers having the long-chain alkyl groups with the number of carbons being not less than 6 are preferable, and polymerizable vinyl monomers having the long-chain alkyl groups with the number of carbons being not less than 12 are particularly preferable. As the polymerizable vinyl monomers having such long-chain alkyl groups, the same as mentioned before are used.

Further, as another polymerizable vinyl monomer copolymerizable with the above polymerizable vinyl monomer having the long-chain alkyl group, the same polymerizable vinyl monomers used for the production of the polymer particles are used. Furthermore, in order to introduce, into the polymer having the long-chain alkyl group, a functional group reactable with that of the polymer particles, the same polymerizable vinyl monomer having the functional group as used for the production of the polymer particles is used, and as such a monomer, one having a functional group reactable with that of the target polymer particles.

Functional groups reactable with each other, for example, the following combinations are recited.

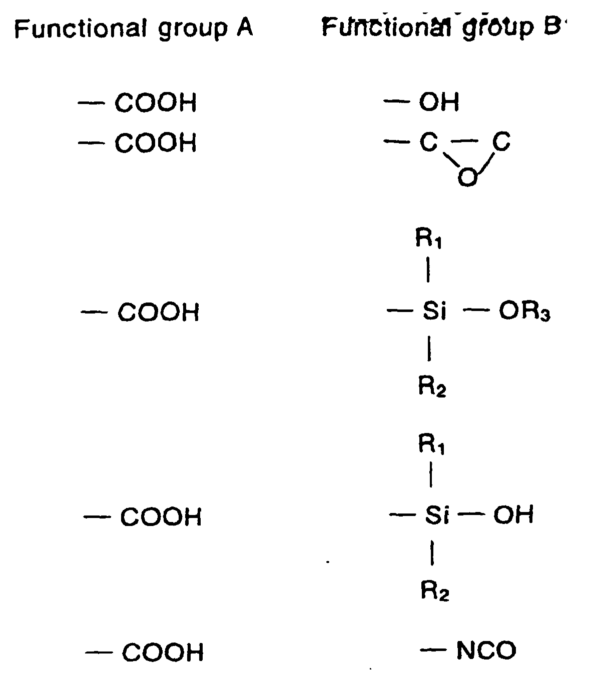

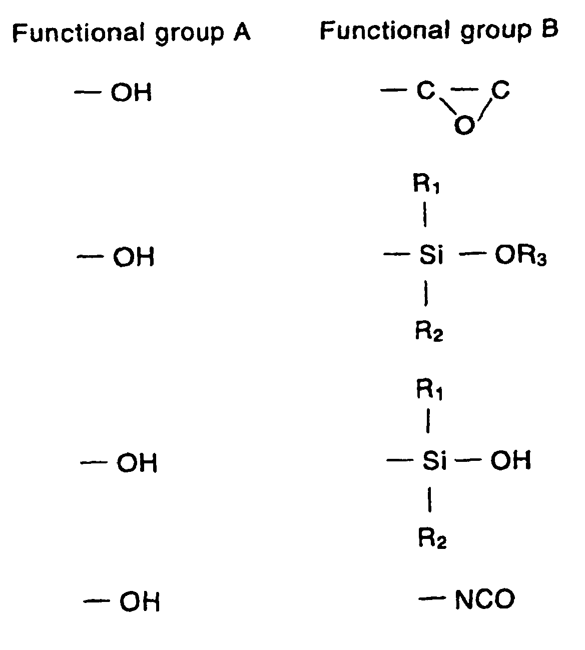

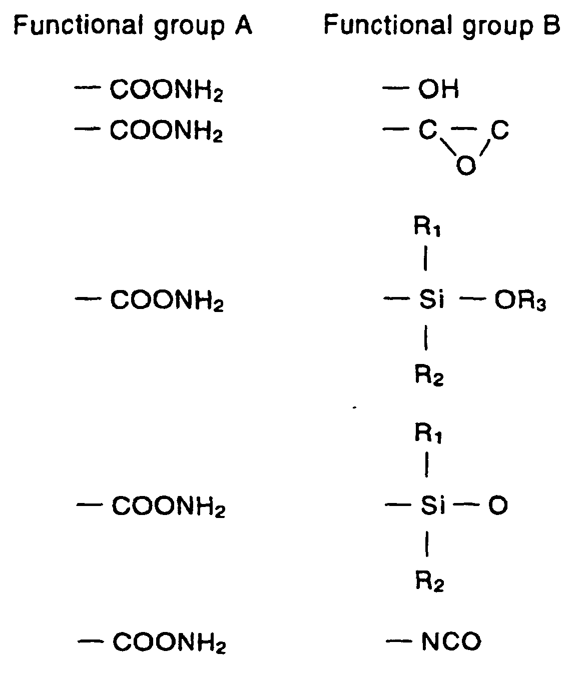

### (Coating the surfaces of the polymer particles)

The surfaces of the polymer particles are coated with layers of a polymer having the above long-chain alkyl groups by the following three methods, for example.
A. A film type coating method in which the polymer particles and particles of a polymer having the long-chain alkyl groups are mixed, and the surface of the polymer particles are coated by applying mechanical stress upon the particles
B. Powder-coating method in which the surfaces of the polymer particles are coated with a dispersion having particle of a polymer having the long-chain alkyl groups dispersed in a liquid binder
C. Film-coating method in which the surfaces of the polymer particles are coated with a solution of a polymer having the long-chain alkyl groups, followed by drying and fixing a device to be used to applying mechanical stress upon each particle in the method A, high speed stirrers such as Hybridizer manufactured by Kabushiki Kaisha Nara Kikai Seisakusho, ANGMTLL manufactured by Hosokawa Micron Co., Ltd. and KOSMOS manufactured by Kawasaki Heavy Industries, Ltd. are recited. As a device for coating the surfaces of the polymer particles with the dispersion or the solution in the methods (B) and (C), stirrers such as Coat COATMIZER and SPIR-A-FIOW manufactured by Floint Industry Co., Ltd. are recited.

The ratio in the particle diameter between the polymer particles and the polymer particles having the long-chain alkyl groups is preferably 100:10 to 100:0.1, particularly preferably 100: not more than 3. Further, although the mixing ration changes depending upon the average particle diameters, physical properties, etc., the polymer particles vis. the polymer particles having long-chain alkyl groups is ordinarily 1: 0.5 to 3 in terms of weight ratio.

The ratio in the particle diameter between the polymer particles and the polymer particles having the long-chain alkyl groups in the method B is ordinarily the same as in the method A.

In any one of the methods, in order covalently bond the polymer having the long-chain alkyl groups to the surfaces of the polymer particles, the reaction is promoted by heating at a given temperature, if necessary, depending upon the combination of the functional groups.

The polymer particles according to the present invention have the respective layers of the polymer having the long-chain alkyl groups at their surfaces. When such composite particles are used as a spacer for a liquid crystal, the liquid crystal molecules are vertically and regularly arranged with respect to the layers of the polymer having the long-chain alkyl groups on the surface of the polymer particles to suppress the orienting abnormality near the liquid crystal spacer. Further, when the polymer particles as neuclei are covalently bonded to the layers of the polymer having the long-chain alkyl groups, the layers of the polymer having the long-chain alkyl groups are hard to be peeled from the polymer particles. Furthermore, the polymer particles are firmly bonded to the substrate due to the melting effect of the layers of the polymer having the long-chain alkyl groups under heating during the production of the liquid crystal display element and further due to a reaction of functional group residues upon the orienting substrate when the polymer layers have the functional groups.

The present invention will be concretely explained based on the following examples, but the invention will not be limited to these examples at all without exceeding its gist.

### Example 3-1 (Production of polymer particles 3A having epoxy groups at their surfaces)

Two hundreds grams of ethyl propionate was charged into a reactor, into which 85.7 g of glycidyl methacrylate, 9.7 g of 2-hydroxyethyl methacrylate, 4.6 g of ethylene glycol dimethacrylate and 0.15 g 2,2'-azobis(2,4-dimethyrvaleronitrile) were further charged. The mixture was subjected to precipitation polymerization at 50 ° C in nitrogen stream for 16 hours. Thereby, polymer particles 3A having epoxy groups at their surfaces were obtained. The polymer particles 3A had a just spherical shape, the average particle diameter of 4.9 *µ* m and a standard deviation of 4 %.

### Example 3-2 (Production of polymer particles 3B having long-chain alkyl groups)

Into a reactor were charged 325 g of methyl alcohol, 9.4 g of ethylene glycol, 30 g of polyvinylpyrrolidone, 4 g of cetanol, 5 g of isobornyl methacrylate, 7.5 g of glycidyl methacrylate and 7.5 g of lauryl methacrylate, and 1.2 g of 2,2'-azobis(2-methylbutylonitrile) was added into the reactor. The mixture was subjected to precipitation polymerization at 60 ° C in nitrogen stream for 5 hours. Thereby, polymer particles 3B having epoxy groups and long-chain alkyl groups at their surfaces were obtained. The polymer particles 3B were washed, milled, and dried. The polymer particles 3B had a just spherical shape and the average particle diameter of 0.35 *µ*m.

### Example 3-3 (Production of polymer particles 3C having long-chain alkyl groups)

Into a reactor were charged 317.7 g of methyl alcohol, 16.7 g of ethylene glycol, 20 g of polyvinylpyrrolidone, 4 g of cetanol, 7.5 g of isobornyl methacrylate, 5 g of 2-methacryloyloxyethyl succinic acid and 7.5 g of lauryl methacrylate, and 1.8 g of 2,2'-azobis(2-methylbutylonitrile) was added into the reactor. The mixture was subjected to precipitation polymerization at 60°C in nitrogen stream for 5 hours. Thereby, polymer particles 3C having carboxyl groups and long-chain alkyl groups at their surfaces were obtained. The polymer particles 3C were washed, milled, and dried. The polymer particles 3C had a just spherical shape and the average particle diameter of 0.3 *µ* m.

### Example 3-4 (Production of polymer particles 3D coated with layers of a polymer having long-chain alkyl groups at their surfaces)

An ordered mixture was prepared by treating 50 g of the polymer particles 1C produced in Example 1-3 and having the carboxylic groups at their surfaces and 10 g of the polymer particles 3B produced in Example 3-2 and having the long-chain alkyl groups and the epoxy groups in an OM Dizer as a Hybridization system manufactured by Kabushiki Kaisha Nara Kikai Seisakusho for 3 minutes. Next, this ordered mixture was subjected to a film-forming treatment at 15000 rpm for 5 minutes by Hybridizer of the Hybridization system. Thereby, particles 3D having the surfaces coated with layers of the polymer the long-chain alkyl groups were obtained.

### Example 3-5 (Production of polymer particles 3E coated with layers of a polymer having long-chain alkyl groups at their surfaces)

An ordered mixture was prepared by treating 50 g of the polymer particles 3A produced in Example 3-1 and having the epoxy groups at their surfaces and 10 g of the polymer particles 3C produced in Example 3-3 and having the long-chain alkyl groups and the carboxyl groups in an OM Dizer as a Hybridization system manufactured by Kabushiki Kaisha Nara Kikai Seisakusho for 3 minutes. Next, this ordered mixture was subjected to a film-forming treatment at 10000 rpm for 3 minutes by Hybridizer of the Hybridization system. Thereby, particles 3E having the surfaces coated with layers of the polymer having the long-chain alkyl groups were obtained.

### Comparative Example 3-1

Ten grams of commercially available silica particles having undergone no surface treatment was dispersed into 30 g of a 2% toluene solution of octadecyltrimethoxy silane, which was heated at 50° C for 1 hour. Then, the reaction product was filtered, washed and heated at 130° C in a dryer for 1 hour. Thereby, silica particles 3F having long-chain alkyl groups at their surfaces were obtained.

### (Evaluations)

Liquid crystal display panels were produced by using particles 3D and 3E each coated with the layers of the polymer having the long-chain alkyl groups at their surfaces. Orienting abnormality around the liquid crystal spacer was observed and evaluated. Results are shown in Table 5.

### (Method for producing the liquid crystal display elements)

A spacer sample was sprayed onto a substrate (90 x 100 mm, manufactured by EHC Co., Ltd.) having an ITO/polyimide orientation-controlling film formed at the surface and subjected to lapping treatment by using a spray gun such that the number of polymer particles sprayed was 50 to 180/mm², and then heat treatment was effected at 150° C for 30 minutes. Thereafter, a sealant was printed upon a peripheral portion of the substrate, and such substrates were bonded to each other by an ordinary method. An STN liquid crystal display element was produced by pouring a liquid crystal ZLI-2293 (S078W) into a cell.

### (Evaluation method)

Fifty V DC voltage was applied to each of the liquid crystal display elements produced by the above method for 1 second, and change in orienting abnormality (light passing state) around the liquid spacer between before and after the application of the voltage was evaluated.

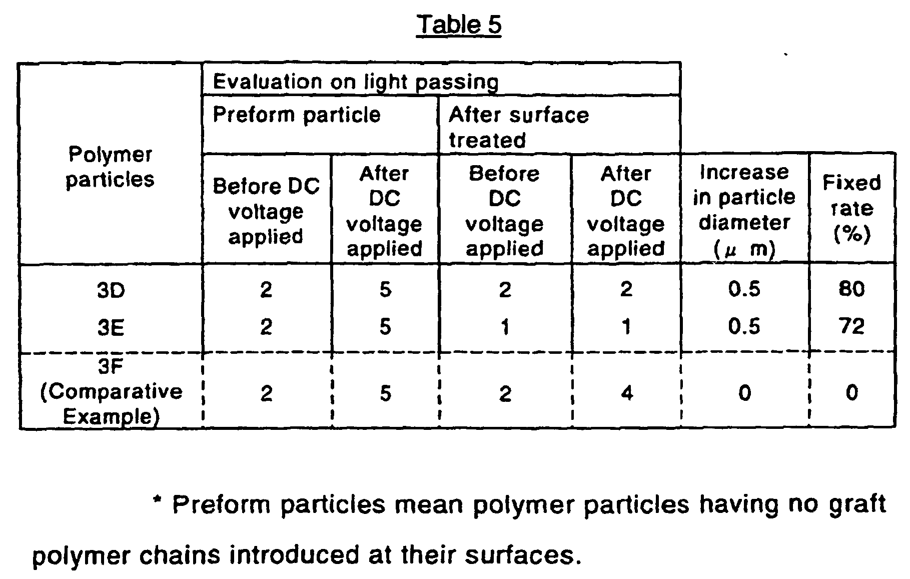

Evaluations on the light passing are shown according to standards 1-5 as follows.
1: no light passing, 2: partial light passing,
3: light passing around 1/3 of particles
4: light passing around not less than half of particles
5: light passing around entire particles

It is clear from the evaluation results in Table 5 that the spacer samples each composed of the polymer particles 3D and 3E each having the surfaces coated with the layers of the polymer the long-chain alkyl groups possess remarkably improved light passing-preventing performance around the particles as compared with the preform particles into which no graft polymer chains are introduced. On the other hand, slight improvement on the light passing-preventing performance is seen with respect to the silica particles 3F having the long-chain alkyl groups introduced into the surfaces of the particles only by the surface treatment with the coupling agent, which is inferior to the light passing-improving effect of the composite polymer particles according to the present invention.

In the present invention, since the liquid crystal molecules are vertically and regularly oriented with respect to the surfaces of the spacer by the layers of the macromolecular polymer containing the long-chain alkyl groups on the surface of the surfaces of the spacer, the orienting abnormality of the liquid crystal around the liquid crystal spacer is suppressed. Owing to this, the light passing on lighting the liquid crystal panel is prevented, so that the contrast of the liquid crystal panel can be enhanced, a ring-shaped disorder mode seen on the panel can be prevented to improve the display quality.

## Claims

1. A spacer for a liquid crystal display element, comprising polymer particles and long-chain alkyl groups held at surfaces of the polymer particles, **characterised in that** said long-chain alkyl groups are straight-chain alkyl groups having from 6 to 22 carbon atoms and are bonded to graft polymer chains graft polymerised to the surfaces of the polymer particles.

2. A spacer for a liquid crystal display element, comprising polymer particles and long-chain alkyl groups held at surfaces of the polymer particles, **characterised in that** each polymer particle comprises a polymer particle body and a layer of a polymer which is physically coated and reacted on the surface of the polymer particle body, and the long-chain alkyl groups are contained in the polymer layer.

3. A process for producing the spacer for the liquid crystal display element set forth in claim 1 or claim 2, wherein said long-chain alkyl groups have a straight-chain with the number of carbons being 6.

4. The spacer for the liquid crystal display element set forth in claim 1, wherein said long-chain alkyl groups have a straight-chain with the number of carbons being not less than 12.

5. The spacer for the liquid crystal display element set forth in claim 4, wherein said long-chain alkyl groups have a straight-chain with the number of carbons being 18.

6. The spacer for the liquid crystal display element set forth in any one of claims 1 to 5, wherein layers having said long-chain alkyl groups held at the surfaces of the polymer also function as fixing layers.

7. The spacer for the liquid crystal display element set forth in any one of claims 1 to 6, wherein coloured particles are used as said polymer particles.

8. A liquid crystal display element using the spacer for the liquid crystal display element set forth in any one of claims 1 to 7, wherein long-chain alkyl groups are held at surfaces of polymer particles.

9. A process for producing a spacer for a liquid crystal display element, said spacer comprising polymer particles and straight-chain alkyl groups having from 6 to 22 carbon atoms held at surfaces thereof, said process comprising introducing said straight-chain alkyl groups into the surfaces of the polymer particles by reacting a straight-chain alkyl compound having from 6 to 22 carbon atoms having a functional group reactive with functional groups present at surfaces of the polymer particles, **characterised in that** graft polymer chains having functional groups are graft polymerized to the surfaces of the polymer particles, the straight-chain alkyl groups having the functional groups are reacted with said functional groups of the graft polymer chains, thereby introducing the straight-chain alkyl groups onto the polymer particles.

10. A process for producing a spacer for a liquid crystal display element, said spacer having straight-chain alkyl groups having from 6 to 22 carbon atoms at its surfaces, said process being **characterised by** introducing graft polymer chains having straight-chain alkyl groups having from 6 to 22 carbon atoms onto surfaces of polymer particles having radical chain transferable functional groups and/or active groups having a radical polymerization initiating ability introduced at the surfaces by graft polymerizing one or more kinds of polymerizable vinyl monomers having straight-chain alkyl groups or a mixture of one or more kinds of polymerizable vinyl monomers having straight-chain alkyl groups and one or more kinds of other polymerizable vinyl monomers copolymerizable with former polymerizable vinyl monomers onto the surfaces of polymer particles.

11. The process for producing a spacer for a liquid crystal display element set forth in claim 10, wherein said radical chain transferable functional groups are mercepto groups and/or polymerizable vinyl groups, and said active groups having the radical polymerization initiating ability are peroxide groups and/or azo groups.

12. A process for producing a spacer for a liquid crystal display element, said spacer having long-chain alkyl groups at its surfaces, said process being **characterised by** coating the surfaces of polymer particles having given functional groups introduced onto the surfaces with respective polymer layers having straight-chain alkyl groups with 6 to 22 carbon atoms and functional groups reactable with those of the polymer particles.

13. The process for producing a spacer for a liquid crystal display element according to claim 12, said spacer having straight-chain alkyl groups at its surfaces, wherein covalent bonds are formed by reacting the functional groups at the surfaces of the polymer particles with those of the respective polymer layers.

## Patentansprüche

1. Abstandshalter für eine Flüssigkristall-Anzeigevorrichtung, enthaltend Polymerpartikel und langkettige Alkylgruppen, die an den Oberflächen der Polymerpartikel gehalten werden, **dadurch gekennzeichnet, dass** die langkettigen Alkylgruppen geradkettige Alkylgruppen mit 6 bis 22 Kohlenstoffatomen sind und an Pfropfpolymerketten gebunden sind, die an den Oberflächen der Polymerpartikel pfropfpolymerisiert sind.

2. Abstandshalter für eine Flüssigkristall-Anzeigevorrichtung, enthaltend Polymerpartikel und langkettige Alkylgruppen, die an den Oberflächen der Polymerpartikel gehalten werden, **dadurch gekennzeichnet, dass** jedes Polymerpartikel einen Polymerpartikelkörper und eine Schicht aus einem Polymeren, welches physikalisch auf die Oberfläche des Polymerpartikelkörpers aufgebracht ist und auf dieser eine Reaktion eingeht, umfasst, und die langkettigen Alkylgruppen in der Polymerschicht enthalten sind.

3. Verfahren zur Herstellung eines Abstandshalters für eine Flüssigkristall-Anzeigevorrichtung gemäß Anspruch 1 oder Anspruch 2, wobei die langkettigen Alkylgruppen eine gerade Kette mit 6 Kohlenstoffen aufweisen.

4. Abstandshalter für eine Flüssigkristall-Anzeigevorrichtung gemäß Anspruch 1, wobei die langkettigen Alkylgruppen eine gerade Kette mit nicht weniger als 12 Kohlenstoffen aufweisen.

5. Abstandshalter für eine Flüssigkristall-Anzeigevorrichtung gemäß Anspruch 4, wobei die langkettigen Alkylgruppen eine gerade Kette mit 18 Kohlenstoffen aufweisen.

6. Abstandshalter für eine Flüssigkristall-Anzeigevorrichtung gemäß wenigstens einem der Ansprüche 1 bis 5, wobei die Schichten, welche die langkettigen Alkylgruppen gehalten an den Oberflächen des Polymeren aufweisen, ebenso als Fixierschichten fungieren.

7. Abstandshalter für eine Flüssigkristall-Anzeigevorrichtung gemäß wenigstens einem der Ansprüche 1 bis 6, wobei als Polymerpartikel Farbpartikel verwendet werden.

8. Flüssigkristall-Anzeigevorrichtung, welche einen Abstandshalter für eine Flüssigkristall-Anzeigevorrichtung gemäß wenigstens einem der Ansprüche 1 bis 7 verwendet, wobei die langkettigen Alkylgruppen an den Oberflächen der Polymerpartikel gehalten werden.

9. Verfahren zur Herstellung eines Abstandshalters für eine Flüssigkristall-Anzeigevorrichtung, wobei der Abstandshalter Polymerpartikel und geradkettige Alkylgruppen mit 6 bis 22 Kohlenstoffatomen, die an den Oberflächen der Polymerpartikel gehalten werden, umfasst, wobei das Verfahren das Einführen der geradkettigen Alkylgruppen in die Oberflächen der Polymerpartikel durch Umsetzen einer geradkettigen Alkylverbindung mit 6 bis 22 Kohlenstoffatomen, welche eine funktionelle Gruppe aufweist, die mit den funktionellen Gruppen, die an den Oberflächen der Polymerpartikel vorliegen, reaktiv ist, umfasst, **dadurch gekennzeichnet, dass** Pfropfpolymerketten, welche funktionelle Gruppen aufweisen, an die Oberflächen der Polymerpartikel pfropfpolymerisiert werden, die geradkettigen Alkylgruppen, welche die funktionellen Gruppen aufweisen, mit den funktionellen Gruppen der Pfropfpolymerketten zur Reaktion gebracht werden, wodurch die geradkettigen Alkylgruppen in die Polymerpartikel eingeführt werden.

10. Verfahren zur Herstellung eines Abstandshalters für eine Flüssigkristall-Anzeigevorrichtung, wobei der Abstandshalter geradkettige Alkylgruppen mit 6 bis 22 Kohlenstoffatomen an seinen Oberflächen aufweist, wobei das Verfahren **dadurch gekennzeichnet ist, dass** Pfropfpolymerketten mit geradkettigen Alkylgruppen mit 6 bis 22 Kohlenstoffatomen in die Oberflächen der Polymerpartikel, welche radikale ketten-übertragbare funktionelle Gruppen und/oder aktive Gruppen mit Radikalpolymerisationsinitiationsfähigkeit aufweisen, eingeführt in die Oberflächen durch Pfropfpolymerisieren einer oder mehrerer Arten polymerisierbarer Vinylmonomerer mit geradkettigen Alkylgruppen oder einer Mischung aus einer oder mehreren Arten polymerisierbarer Vinylmonomerer mit geradkettigen Alkylgruppen und einer oder mehrerer Arten anderer polymerisierbarer Vinylmonomerer, die mit den ersteren polymerisierbaren Vinylmonomeren auf den Oberflächen der Polymerpartikel copolymerisierbar sind, eingeführt werden.

11. Verfahren zur Herstellung eines Abstandshalters für eine Flüssigkristall-Anzeigevorrichtung gemäß Anspruch 10, wobei die radikalen kettenübertragbaren funktionellen Gruppen Mercaptogruppen und/oder polymerisierbare Vinylgruppen sind, und die aktiven Gruppen, welche die Fähigkeit zur Radikalpolymerisationsinitiation besitzen, Peroxidgruppen und/oder Azogruppen sind.

12. Verfahren zur Herstellung eines Abstandshalters für eine Flüssigkristall-Anzeigevorrichtung, wobei der Abstandshalter langkettige Alkylgruppen an seinen Oberflächen aufweist, wobei das Verfahren **dadurch gekennzeichnet ist, dass** die Oberflächen der Polymerpartikel, welche bestimmte funktionelle Gruppen aufweisen, die in die Oberflächen eingeführt wurden, mit entsprechenden Polymerschichten, welche geradkettige Alkylgruppen mit 6 bis 22 Kohlenstoffatomen und funktionelle Gruppen, die mit denen der Polymerpartikel reagieren können, aufweisen, beschichtet werden.

13. Verfahren zur Herstellung eines Abstandshalters für eine Flüssigkristall-Anzeigevorrichtung gemäß Anspruch 12, wobei der Abstandshalter geradkettige Alkylgruppen an seinen Oberflächen aufweist, wobei kovalente Bindungen durch die Reaktion der funktionellen Gruppen an den Oberflächen der Polymerpartikel mit denen der entsprechenden Polymerschichten ausgebildet werden.

## Revendications

1. Entretoise pour un élément d'affichage à cristaux liquides, comprenant des particules de polymère et des groupes alkyle à longue chaîne situés aux surfaces des particules de polymère, **caractérisée en ce que** lesdits groupes alkyle à longue chaîne sont des groupes alkyle à chaîne linéaire possédant de 6 à 22 atomes de carbone et sont liés à des chaînes de polymère greffé polymérisées par greffage aux surfaces des particules de polymère.

2. Entretoise pour un élément d'affichage à cristaux liquides, comprenant des particules de polymère et des groupes alkyle à longue chaîne situés aux surfaces des particules de polymère, **caractérisée en ce que** chaque particule de polymère comprend un corps particulaire de polymère et une couche d'un polymère qui est physiquement enduite et mise à réagir sur la surface du corps particulaire de polymère, et les groupes alkyle à longue chaîne sont contenus dans la couche de polymère.

3. Procédé de production de l'entretoise pour l'élément d'affichage à cristaux liquides déterminée dans la revendication 1 ou la revendication 2, dans lequel lesdits groupes alkyle à longue chaîne ont une chaîne linéaire avec un nombre de carbones de 6.

4. Entretoise pour l'élément d'affichage à cristaux liquides déterminée dans la revendication 1, dans laquelle lesdits groupes alkyle à longue chaîne ont une chaîne linéaire avec un nombre de carbones de pas moins de 12.

5. Entretoise pour l'élément d'affichage à cristaux liquides déterminée dans la revendication 4, dans laquelle lesdits groupes alkyle à longue chaîne ont une chaîne linéaire avec un nombre de carbones de 18.

6. Entretoise pour l'élément d'affichage à cristaux liquides déterminée dans l'une quelconque des revendications 1 à 5, dans laquelle les couches ayant lesdits groupes alkyle à longue chaîne situés aux surfaces du polymère jouent également le rôle de couches de fixation.

7. Entretoise pour l'élément d'affichage à cristaux liquides déterminée dans l'une quelconque des revendications 1 à 6, dans laquelle des particules colorées sont utilisées en tant que lesdites particules de polymère.

8. Elément d'affichage à cristaux liquides utilisant l'entretoise pour l'élément d'affichage à cristaux liquides déterminée dans l'une quelconque des revendications 1 à 7, dans lequel des groupes alkyle à longue chaîne sont situés aux surfaces des particules de polymère.

9. Procédé de production d'une entretoise pour un élément d'affichage à cristaux liquides, ladite entretoise comprenant des particules de polymère et des groupes alkyle à chaîne linéaire possédant de 6 à 22 atomes de carbone situés aux surfaces de celles-ci, ledit procédé consistant à introduire lesdits groupes alkyle à chaîne linéaire dans les surfaces des particules de polymère en faisant réagir un composé constitué de groupes alkyle à chaîne linéaire possédant de 6 à 22 atomes de carbone et ayant un groupe fonctionnel réactif avec des groupes fonctionnels présents aux surfaces des particules de polymère, **caractérisé en ce que** les chaînes de ce polymère greffé ayant des groupes fonctionnels sont polymérisées par greffage aux surfaces des particules de polymère, les groupes alkyle à chaîne linéaire ayant les groupes fonctionnels sont mis à réagir avec lesdits groupes fonctionnels des chaînes de polymère greffé, introduisant de ce fait les groupes alkyle à chaîne linéaire sur les particules de polymère.

10. Procédé de production d'une entretoise pour un élément d'affichage à cristaux liquides, ladite entretoise ayant des groupes alkyle à chaîne linéaire possédant de 6 à 22 atomes de carbone à ses surfaces, ledit procédé consistant à introduire des chaînes de polymère greffé ayant des groupes alkyle à chaîne linéaire possédant de 6 à 22 atomes de carbone sur les surfaces des particules de polymère ayant des groupes fonctionnels transférables à une chaîne radicalaire et/ou des groupes actifs ayant la capacité d'initier une polymérisation radicalaire introduits aux surfaces en polymérisant par greffage un ou plusieurs types de monomères vinyliques polymérisables ayant des groupes alkyle à chaîne linéaire ou un mélange d'un ou plusieurs types de monomères vinyliques polymérisables ayant des groupes alkyle à chaîne linéaire et d'un ou plusieurs types d'autres monomères vinyliques polymérisables qui peuvent être copolymérisés avec les précédents monomères vinyliques polymérisables sur les surfaces des particules de polymère.

11. Procédé de production d'une entretoise pour un élément d'affichage à cristaux liquides déterminée dans la revendication 10, dans lequel lesdits groupes fonctionnels transférables à une chaîne radicalaire sont des groupes mercapto et/ou des groupes vinyle polymérisables, et lesdits groupes actifs ayant la capacité d'initier une polymérisation radicalaire sont des groupes peroxyde et/ou des groupes azo.

12. Procédé de production d'une entretoise pour un élément d'affichage à cristaux liquides, ladite entretoise ayant des groupes alkyle à longue chaîne à ses surfaces, ledit procédé consistant à enduire les surfaces des particules de polymère ayant des groupes fonctionnels donnés introduits sur les surfaces avec les couches de polymère respectives ayant des groupes alkyle à chaîne linéaire possédant de 6 à 22 atomes de carbone et des groupes fonctionnels pouvant réagir avec ceux des particules de polymère.

13. Procédé de production d'une entretoise pour un élément d'affichage à cristaux liquides selon la revendication 12, ladite entretoise ayant des groupes alkyle à chaîne linéaire à ses surfaces, dans lequel des liaisons covalentes sont formées en faisant réagir les groupes fonctionnels aux surfaces des particules de polymère avec ceux des couches de polymère respectives.
